# EUROPÄISCHE PATENTANMELDUNG

(11) **EP 4 653 732 A1**
(43) Veröffentlichungstag der Anmeldung: **26.11.2025**
(21) Anmeldenummer: 25176594.7
(22) Anmeldetag: 15.05.2025
(51) Int. Cl.: F16K 27/02, F16K 35/10, F16K 17/06, F16K 17/04

(54) **SICHERHEITSVENTIL**

(30) Priorität: 22.05.2024 DE 202024102638 U
(71) Anmelder: Güde GmbH & Co. KG, 74549 Wolpertshausen (DE)
(72) Erfinder: Bürkle, Joachim, 74549 Wolpertshausen (DE)
(74) Vertreter: Misselhorn, Hein-Martin

(57) **Zusammenfassung**

Sicherheitsventil zur Begrenzung des Drucks eines Druckbehälters, insbesondere eines Druckluftbehälters, mit einem einen Ventilsitz aufweisenden Ventilgehäuse und einem in diesem axial verschiebbar aufgenommenen, mit dem Ventilsitz zusammenwirkenden Ventilkörper von dem auf der sitzabgewandten Seite eine Ventilstange absteht, wobei der Ventilkörper durch Zug an der Ventilstange entgegen der einstellbaren Kraft einer Schließfeder vom Ventilsitz abhebbar ist, dadurch gekennzeichnet, dass der die Außenbegrenzung des Sicherheitsventils bildende Mantel nirgendwo eine Öffnung trägt in die ein Fremdkörper derart eingebracht werden kann, dass ein Abheben vom Ventilsitz bei Anliegen des bestimmungsgemäßen Ventilöffnungsdrucks erschwert oder vereitelt wird.

## Beschreibung

Die Erfindung betrifft ein Sicherheitsventil nach dem Oberbegriff des Anspruchs 1.

### TECHNISCHER HINTERGRUND

Sicherheitsventile (oder auch Überdruckventile) gehören zu den Sicherheitsarmaturen und schützen druckbeaufschlagte Räume oder Druckbehälter vor einem unzulässigen Druckanstieg. Bei einem Überschreiten eines entsprechend einstellbaren Ansprechdruckes werden Gase, Dämpfe oder Flüssigkeiten in die Atmosphäre oder in Sammelrohrleitungen abgeleitet.

Die Wirksamkeit von derartigen Sicherheitsventilen nach einer bestimmten Betriebsdauer muss mindestens drei Mal jährlich untersucht werden. Hierbei ist eine unautorisierte Abänderung des eingestellten Drucks nicht gestattet. Es gehören bereits derartige Sicherheitsventile zum Stand der Technik, bei denen die erforderliche Prüfung leicht vom Betreiber ausgeführt werden kann. Hierbei existiert jedoch immer das Risiko, dass der eingestellte Druck manipuliert werden kann. Es besteht somit meist eine allgemeine Manipulationsmöglichkeit, die aufgrund der Prüfmöglichkeit nochmals wahrscheinlicher wird. Die Prüfbarkeit der Sicherheitsventile ist somit oft ein Einfallstor für Manipulationsversuche.

### STAND DER TECHNIK

Eine Lösung hierfür bietet beispielsweise die DE 20 2021 101 814 U1 (im Folgenden auch D1 genannt).

Eine weitere Lösung für dieses Problem bietet die DE 20 2020 002 717 U1 (im Folgenden auch D2 genannt), welche in vollem Umfang auch Gegenstand dieser Offenbarung ist. In der D2 wird ein Sicherheitsventil beschrieben, welches ein Ventilgehäuse mit einem Ventilsitz und einem Ventilkörper aufweist, wobei der Ventilkörper axial verschiebbar im Ventilgehäuse aufgenommen wird und mit dem Ventilsitz zusammenwirkt, sodass der Ventilkörper entgegen der einstellbaren Kraft einer Schließfeder abhebbar ist. Um nun eine Druckmanipulation zu verhindern, wird von der D1 vorgeschlagen, dass das Ventilgehäuse einen rückwärtigen Mantelstutzen aufweisen soll, der ein Innengewinde aufweist. In dieses Innengewinde ist wiederum eine Einstellschraube mit entsprechendem Außengewinde einschraubbar, welche einen Anschlag aufweist, welcher mit dem rückwärtigen Ende der besagten Schließfeder zusammenwirkt. Hinter den aufgeschraubten Mantelstutzen kann laut D1 nun eine Abdeckmuffe aufgeschraubt werden, die einen vorderen Kragen aufweist. Dieser vordere Kragen soll genau diesen Eingriff zwischen Mantelstutzen und Einstellschraube verdecken.

Die Abdeckmuffe weist zudem einen radial nach innen vorspringenden Anschlag auf, der die Einstellschraube hintergreift, wobei diesem Anschlag ein Gegenanschlag zugeordnet ist, welcher an einer Ventilstange angebracht ist, die wiederum vom Ventilkörper nach hinten absteht.

Zur Durchführung einer Ventilprüfung muss somit die Abdeckmuffe von der Einstellschraube abgeschraubt werden und kann daraufhin zurückgezogen werden. Über den inneren Anschlag der Abdeckmuffe wird die Abdeckmuffe somit mit dem zugehörigen Gegenanschlag der Ventilstange in Kontakt gebracht und bei einem weiteren Zurückziehen der Abdeckmuffe wird die Ventilstange und damit der mit ihr verbundene Ventilkörper vom Ventilsitz abgehoben. Über Ablassöffnungen des Ventilgehäuses kann daraufhin Luft abgelassen werden und die Prüfung des Sicherheitsventils durchgeführt werden. Die Einstellschraube bleibt dadurch immer von der Abdeckmuffe bzw. ihres vorderen Kragens verdeckt und von außen nicht zugänglich, wodurch das Sicherheitsventil hier nicht manipuliert werden kann.

Trotz dieser Verhinderung der lokalen Manipulation des Sicherheitsventils, gibt es auch im Sicherheitsventil nach D2 und anderen bauähnlichen Sicherheitsventilen wie einem Sicherheitsventil nach D1 noch Manipulationsmöglichkeiten.

Laut D2 ist beispielswiese die besagte Abdeckmuffe rückwärtig zumindest weitgehend geschlossen, weshalb die Abdeckmuffe an ihrem rückwärtigen Ende einen Verschluss wie einen Verschlussdeckel aufweist. Hier nennt die D2 jedoch beispielsweise eine Lüftungsöffnung, die bei Sicherheitsventilen an ihrem hinteren Ende weit verbreitet sind. Meist wird diese Lüftungsöffnung zentral in dem Verschluss (beispielsweise dem Verschlussdeckel) vorgesehen. Hierdurch ergibt sich jedoch direkt eine offensichtliche Möglichkeit zur Manipulation des Sicherheitsventils. Wird in diese Lüftungsöffnung ein blockierendes Teil, beispielsweise eine Spax^{®}-Schraube oder eine Blechschraube eingebracht und die Ventilstange blockiert, kann der Ventilkörper nicht mehr vom Ventilsitz abheben und das Sicherheitsventil löst auch bei einem erreichten Ansprechdruck nicht mehr aus. Wie man zwischenzeitlich feststellen musste birgt dies in der Praxis tatsächlich ein sehr großes Problem.

Darüber hinaus weist das Ventilgehäuse auch die angesprochenen Ablassöffnungen auf. Diese sind oft so gestaltet, dass auch dort ein blockierendes Teil - wie beispielsweise ein Nagel - rückwärtig hinter dem Ventilkörper eingebracht werden kann. So wird wiederum der Ventilkörper auf seinem Ventilsitz gehalten, auch wenn ein entsprechender Ansprechdruck erreicht wird und das Sicherheitsventil kann nicht mehr auslösen.

Zudem weisen derartige Sicherheitsventile oftmals auch radiale Bohrungen im Bereich der Schließfeder auf, die den Zugriff auf die Schließfeder ermöglichen. Hier kann analog zu den oben genannten Beispielen auch die Schließfeder manipuliert werden, indem beispielsweise ein blockierendes Teil eingeschoben wird und hiermit die Schließfeder blockiert wird. So wird wiederum der Ventilkörper auf seinem Ventilsitz gehalten, auch wenn ein entsprechender Ansprechdruck erreicht wird und das Sicherheitsventil kann nicht mehr auslösen.

### AUFGABE DER ERFINDUNG

Im Lichte des zuvor Gesagten ist es die Aufgabe der Erfindung, ein Mittel zur Verfügung zu stellen, mit welchem ein Sicherheitsventil eingangs erwähnter Art gegen Druckmanipulation geschützt werden kann.

### DIE ERFINDUNGSGEMÄSSE LÖSUNG

Diese Aufgabe wird mit den Merkmalen des Anspruchs 1 gelöst. Hierzu wird ein Sicherheitsventil zur Begrenzung des Drucks eines Druckbehälters, insbesondere eines Druckluftbehälters, vorgeschlagen. Dieses Sicherheitsventil weist ein Ventilgehäuse auf, das einen Ventilsitz umfasst. Darüber hinaus weist das Ventilgehäuse einen Ventilkörper auf, welcher in dem Ventilgehäuse axial verschiebbar aufgenommen wird und mit dem Ventilsitz zusammenwirkt. Von diesem Ventilkörper steht auf der sitzabgewandten Seite eine Ventilstange ab, wobei der Ventilkörper durch Zug an der Ventilstange entgegen der einstellbaren Kraft einer Schließfeder vom Ventilsitz abhebbar ist.

Das Ventilgehäuse ist hierbei mit einem Innengewinde versehen, in welches direkt oder indirekt ein Mantelstutzen einschraubbar ist. Der Mantelstutzen ist somit direkt über ein Außengewinde an dem Mantelstutzen selbst in das Innengewinde des Ventilgehäuses einschraubbar oder ein anderes Teil ist in das Innengewinde des Ventilgehäuses einschraubbar, wobei dieses andere Teil dann mit dem Mantelstutzen direkt oder indirekt verbunden ist, bevorzugt fest verbunden.

Dieser Mantelstutzen weist ein Innengewinde auf, in welches ein Anschlag einschraubbar ist, der mit dem rückwärtigen Ende der Schließfeder zusammenwirkt. Das rückwärtige Ende der Schließfeder ist das Ende der Schließfeder, das auf der dem Ventilsitz abgewandten Seite liegt. Hinter diesem Anschlag ist eine mit dem Ventilgehäuse verschraubbare Abdeckung vorgesehen, die einen nach innen vorspringenden Anschlag aufweist, der derart hinter einen Vorsprung der Ventilstange fasst, dass entweder durch Schrauben der Abdeckung in Losrichtung oder durch völliges Abschrauben der Abdeckung und Aufbringung von händischem Zug an der Ventilstange gezogen werden kann, dass das Sicherheitsventil abbläst. Die Betätigung über diese Ventilstange stellt somit die schon eingangs erwähnte Überprüfung des Sicherheitsventils dar, da hier der Ventilkörper vom Ventilsitz gezogen wird und so überprüft wird, ob das Sicherheitsventil abblasen kann.

Hierbei vereitelt die Abdeckung stets den Zugang zum Anschlag der Schließfeder soweit, dass der Anschlag und somit die Schließfederspannung nicht verstellt werden kann, wobei die Abdeckung einen Topf ausbildet, der das Ende der Ventilstange aufnimmt. Das Ende der Ventilstange liegt somit in jeder bestimmungsgemäßen Position zumindest teilweise in dem von diesem Topf aufgespannten hohlen Innenraum.

Das erfindungsgemäße Sicherheitsventil zeichnet sich einerseits dadurch aus, dass der Topf vollständig durch einen Deckel verschlossen ist. Somit weist das Sicherheitsventil keine Lüftungsöffnungen im Bereich des Deckels und/oder in Gänze keine Lüftungsöffnungen auf.

Alternativ zeichnet sich das erfindungsgemäße Sicherheitsventil dadurch aus, dass der Deckel eine Lüftungsöffnung oder mehrere Lüftungsöffnungen aufweist, die derart klein ist/sind, dass ein Einschrauben einer Schraube in eine jeweilige Lüftungsöffnung nicht möglich ist. Die jeweilige Lüftungsöffnung ist somit so klein, dass eine Schraube hier keinen Angriffspunkt findet und/oder so klein, dass eine reguläre Schraube hier abreißen würde oder abgeschert werden würde. Alternativ oder zusätzlich zeichnet sich das erfindungsgemäße Sicherheitsventil dadurch aus, dass der Deckel eine Lüftungsöffnung aufweist, die derart schräg verläuft, dass die Achse der Lüftungsöffnung an der Ventilstange vorbeiführt. Hier führt die Achse der Lüftungsöffnung bevorzugt dann an der Ventilstange vorbei, wenn sie sich in der obersten Position befindet und der Ventilkörper somit maximal vom Ventilsitz abgehoben ist. Bevorzugt stößt der Ventilkörper hier an einem oberen Anschlag an. Besonders bevorzugt ist es hier zudem, wenn die Achse der Lüftungsöffnung so verläuft, dass sie auch in der eben angesprochenen obersten Position der Ventilstange noch einen Abstand von bevorzugt mindestens 2 mm, besonders bevorzugt von mindestens 5 mm zur Ventilstange aufweist. Alternativ oder zusätzlich zeichnet sich das erfindungsgemäße Sicherheitsventil dadurch aus, dass die Lüftungsöffnung exzentrisch an dem Deckel angebracht ist und außerhalb des Einflussbereichs der Ventilstange ist. Exzentrisch am Deckel angebracht meint im Sinne der Erfindung, dass die Lüftungsöffnung nicht im Zentrum des Deckels vorgesehen ist. Die Lüftungsöffnung befindet sich dann außerhalb des Einflussbereichs der Ventilstange, wenn die Achse der Lüftungsöffnung komplett an der Ventilstange vorbeiführt. Besonders bevorzugt ist es zudem, wenn die Achse der Lüftungsöffnung auch an dem Vorsprung der Ventilstange vorbeiführt, der im rückwärtigen, vom Ventilsitz abgewandten Ende der Ventilstange bevorzugt vorherrscht. Besonders bevorzugt ist zudem, wenn die Achse der Lüftungsöffnung einen Abstand von mindestens 2 mm, besonders bevorzugt von mindestens 5 mm zum Vorsprung der Ventilstange aufweist. Es ist auch möglich, dass mehrere dieser exzentrischen Lüftungsöffnungen an dem Deckel vorgesehen sind.

Durch diese oben beschriebenen Möglichkeiten wird auf einfache Art und Weise das Potential einer Manipulation des Sicherheitsventils gesenkt.

### BEVORZUGTE WEITERBILDUNGSMÖGLICHKEITEN

Eine bevorzugte Ausführungsform besteht darin, dass das Ventilgehäuse mindestens eine Ablassöffnung zum bestimmungsgemäßen Ablassen des überhöhten Drucks nach Abheben des Ventilkörpers vom Ventilsitz aufweist, wobei die mindestens eine Ablassöffnung so gestaltet ist bzw. alle weiteren Ablassöffnungen ebenfalls so gestaltet sind, dass sie in jeder bestimmungsgemäßen Stellung des Ventilkörpers nicht den Bereich hinter dem Ventilkörper freigeben. Der Bereich hinter dem Ventilkörper ist der rückwärtige Bereich, der sich an den Ventilkörper auf der Seite anschließt, die in Richtung des Topfes zeigt. Somit kann kein blockierender Gegenstand hinter den Ventilkörper eingebracht werden. Somit kann auf einfache Art und Weise sichergestellt werden, dass der Ventilkörper nicht durch die Ablassöffnungen hindurch festgesetzt wird, sodass dieser sich nicht mehr vom Ventilsitz abheben lässt.

Es ist darüber hinaus besonders bevorzugt, wenn radiale Öffnungen im Mantelstutzen nicht im Bereich der Schließfeder vorherrschen oder nur so, dass die Schließfeder in keiner Stellung des Ventils direkt manipulierbar ist. So ist es bevorzugt keine radialen Öffnungen im Mantelstutzen vorzusehen und falls - zur Entlüftung - doch notwendig, diese in einem Bereich vorzusehen, der außerhalb des Bereichs liegt, in dem die Schließfeder angebracht ist. Es sind so bevorzugt keine radialen Öffnungen im Mantelstutzen vorzusehen, die allein schon den Blick auf die Schließfeder freigeben oder die es ermöglichen mit einem blockierenden Gegenstand mit der Schließfeder zu interagieren. So kann auf einfache Art und Weise sichergestellt werden, dass die Schließfeder nicht nachträglich manipuliert werden kann. "Im Bereich der Schließfeder" befinden sich radiale Öffnungen auf jeden Fall dann, wenn die Achse einer jeweiligen radialen Öffnung die Mantelfläche einer Schließfeder schneidet. Die Mantelfläche einer Schließfeder ist diejenige Mantelfläche eines zylindrischen Körpers, der die Schließfeder einhüllt.

Zudem ist es besonders bevorzugt, wenn das Sicherheitsventil eine Schutzhülse aufweist, die zumindest die radialen Öffnungen des Mantelstutzens verdeckt. Diese Schutzhülse kann somit auf einfache Art und Weise doch eine Entlüftung mit radialen Öffnungen im Mantelstutzen ermöglichen, die im Bereich der Schließfeder liegen.

Darüber hinaus ist es besonders bevorzugt, wenn der Deckel nicht zerstörungsfrei von dem Topf abnehmbar ist. So kann ein möglicher Manipulationsversuch durch gewaltsame Abnahme des Deckels sofort erkannt werden.

Außerdem ist es besonders bevorzugt, wenn der Deckel so gestaltet und montiert ist - bevorzugt nachbehandelt -, dass er für das unbewaffnete Auge (also ohne Hilfsmittel) als einstofflich-integraler Bestandteil des Topfes erscheint. So wird einem möglichen Manipulator des Sicherheitsventils nicht der Anschein vermittelt, dass es einen Deckel gibt, der eventuell abnehmbar sein könnte.

Weitere mögliche Ausgestaltungen, Funktionsweisen und Vorteile ergeben sich aus den abhängigen Ansprüchen und/oder der nachfolgenden Beschreibung des Ausführungsbeispiels und/oder anhand der Figuren.

### FIGURENLISTE

Die Figur 1 zeigt ein erfindungsgemäßes Sicherheitsventil in geschnittener Seitenansicht mit komplett geschlossenem Deckel und geschlossenem Mantelstutzen.
Die Figur 2 zeigt ein erfindungsgemäßes Sicherheitsventil in geschnittener Seitenansicht mit einem Deckel mit schräger Lüftungsöffnung und geschlossenem Mantelstutzen.
Die Figur 3 zeigt ein erfindungsgemäßes Sicherheitsventil in geschnittener Seitenansicht mit einem Deckel mit sehr kleinen Lüftungsöffnungen und geschlossenem Mantelstutzen.
Die Figur 4 zeigt ein erfindungsgemäßes Sicherheitsventil in geschnittener Seitenansicht mit einem Deckel mit exzentrischer Lüftungsöffnung und geschlossenem Mantelstutzen.
Die Figur 5 zeigt ein erfindungsgemäßes Sicherheitsventil in geschnittener Seitenansicht mit komplett geschlossenem Deckel, Mantelstutzen mit radialen Öffnungen und Schutzhülse.

### BEVORZUGTE AUSFÜHRUNGSBEISPIELE

### ERSTES AUSFÜHRUNGSBEISPIEL

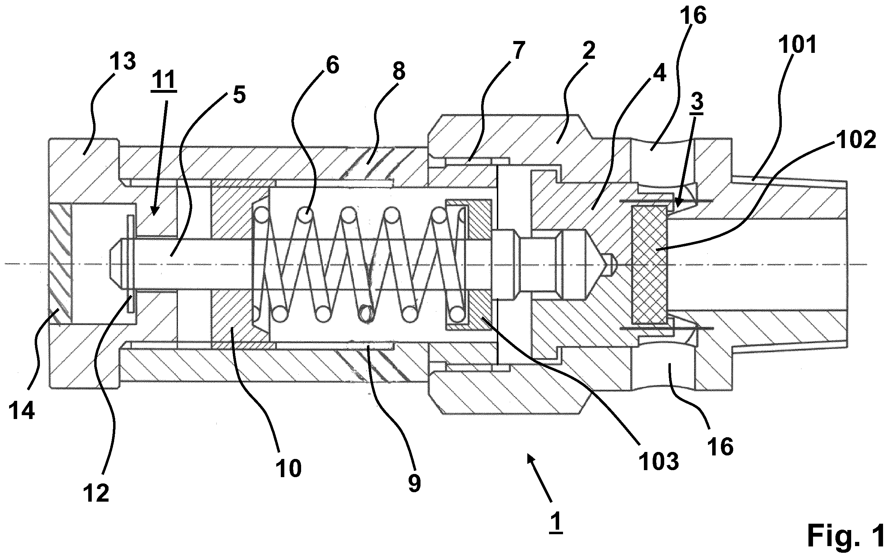

Zunächst zeigt Fig. 1 ein erstes Ausführungsbeispiel des erfindungsgemäßen Sicherheitsventils 1. An seinem unteren Ende weist das Sicherheitsventil 1 einen Gewindeabschnitt 101 auf, welcher bevorzugt Teil eines Ventilgehäuses 2 ist. Dieser Gewindeabschnitt 101 wird zum Einschrauben des Sicherheitsventils 1 in eine geeignete Gewindeaufnahme des jeweils damit auszustattenden Druckbehälters genutzt. Das Ventilgehäuse 2 umfasst darüber hinaus auch einen Ventilsitz 3 auf welchem der Ventilkörper 4 sitzt, solange kein unzulässig hoher Druck erreicht ist. Der Ventilkörper 4 umfasst bevorzugt auch ein Ventilelement 102 mit Dichtfläche, das eine sichere Abdichtung des Ventilkörpers 4 gegenüber seinem Ventilsitz 3 gewährleistet. Das Ventilgehäuse 2 beinhaltet bevorzugt auch mindestens eine, bevorzugt mehrere Ablassöffnungen 16 durch welche der Druck abgelassen werden kann, bevorzugt indem Luft durch die Ablassöffnungen 16 entweicht. Wie man sieht, ist die jeweilige Ablassöffnung 16 so positioniert und der Ventilkörper 4 so gestaltet, dass über die Ablassöffnung 16 niemals mit einem Fremdkörper in den Bereich der dem Sitz abgewandten Stirnseite des Ventilkörpers 4 eingedrungen werden kann, womit jeder Versuch vereitelt wird, den Ventilkörper 4 auf seiner seinem Sitz abgewandten Stirnseite zu blockieren.

Rückwärtig an den Ventilkörper 4 anschließend, bevorzugt zumindest teilweise vom Ventilkörper 4 aufgenommen, umfasst das Sicherheitsventil 1 eine Ventilstange 5. Um diese Ventilstange 5 herum befindet sich bevorzugt eine Schließfeder 6, welche bevorzugt als Spiral-Druckfeder ausgeführt ist. An seinem dem Ventilkörper 4 zugewandten Ende besitzt die Schließfeder 6 einen zugeordneten Anschlag 103, welcher bevorzugt fest mit der Ventilstange 5 verbunden ist und somit mit dieser und dem Ventilkörper 4 bewegt wird.

Das Ventilgehäuse 2 umfasst zudem bevorzugt rückseitig, also an seinem dem Gewindeabschnitt 101 abgewandten Ende ein Innengewinde 7, in welches ein Mantelstutzen 8 direkt oder indirekt eingeschraubt werden kann. Auch dieser Mantelstutzen 8 umfasst ein Innengewinde 9, in welches bevorzugt ein Anschlag 10 eingeschraubt werden kann, welcher als Anschlag für das rückwärtige Ende - also das dem Ventilkörper 4 abgewandten Ende - der Schließfeder 6 fungiert. Der Ventilkörper 4 wird somit entgegen der Federkraft dieser Schließfeder 6 nach oben, also vom Ventilsitz 3 vom anstehenden Druck weggedrückt, sofern ein zu hoher Druck anliegt, welcher dann über die Ablassöffnungen 16 entweichen kann.

Der entsprechende Ansprechdruck des Sicherheitsventils 1 kann bevorzugt durch die entsprechende Einschraubposition des Anschlags 10 eingestellt werden. Die Ventilstange 5 wird bevorzugt zumindest teilweise von dem Mantelstutzen 8 und vom Anschlag 10 umschlossen. Die Ventilstange 5 läuft somit bevorzugt durch den Anschlag 10 hindurch und das freie Ende der Ventilstange 5 wird von einer Abdeckung, bevorzugt in Gestalt eines Topfes 13, aufgenommen. Dieser Topf 13 umfasst hierbei bevorzugt einen nach innen hervorspringenden Anschlag 11. Dieser Anschlag 11 interagiert mit einem Vorsprung 12 der Ventilstange 5, welcher sich bevorzugt im Bereich des freien Endes der Ventilstange 5 befindet. Der Vorsprung 12 befindet sich somit - bezogen auf die Gesamtlänge der Ventilstange - bevorzugt im rückwärtigen Zwanzigstel, besonders bevorzugt im rückwärtigen Dreißigstel der Gesamtlänge. Es ist sogar besonders bevorzugt, wenn zwischen freier Stirnfläche der Ventilstange 5 und dem Vorsprung 12 höchstens 15 mm Abstand, besonders bevorzugt sogar höchstens 10 mm Abstand sind. Der Vorsprung 12 kann bevorzugt nach Art eines Sicherungsrings in einer Nut an der Ventilstange 5 angebracht sein. Der Vorsprung 12 ruht in unbelastetem Zustand - also, wenn der Ansprechdruck noch nicht erreicht ist - direkt oder indirekt (zum Beispiel durch eine zusätzliche Unterlegscheibe) auf dem Anschlag 11.

Der Topf 13 kann darüber hinaus bevorzugt auch in das Gewinde 9 des Mantelstutzens 8 eingeschraubt werden, bevorzugt so, dass er auf der Stirnseite des Mantelstutzens aufliegt. Zur Überprüfung des Sicherheitsventils 1 kann nun dieser Topf 13 herausgeschraubt werden. Durch Ziehen an diesem Topf 13 kann der Ventilkörper 4 manuell vom Ventilsitz 3 abgehoben werden, da die Ventilstange 5 über den Vorsprung 12 am Topf 13 bzw. an dessen Anschlag 11 anliegt und somit den fest mit ihr verbundenen Ventilkörper 4 mitzieht.

In diesem ersten Ausführungsbeispiel ist der Topf 13 vollständig durch einen Deckel 14 verschlossen. Auch der Mantelstutzen 8 weist keine Öffnungen auf.

### ZWEITES AUSFÜHRUNGSBEISPIEL

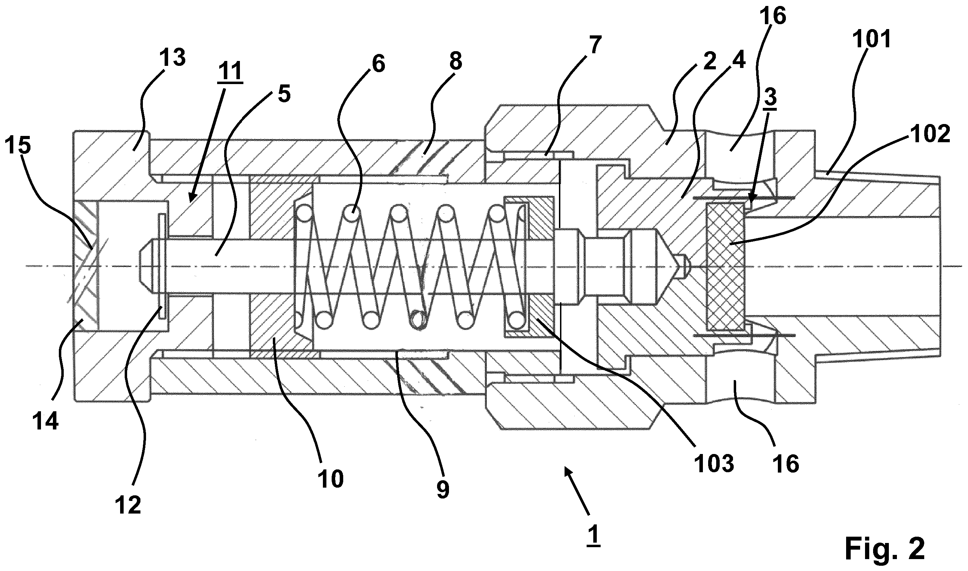

Das zweite bevorzugte Ausführungsbeispiel ist in Fig. 2 zu sehen. Das Sicherheitsventil 1 ist hierbei analog zu dem ersten Ausführungsbeispiel aufgebaut. Nur der Deckel 14 weist hierbei eine schräge Lüftungsöffnung 15 auf.

### DRITTES AUSFÜHRUNGSBEISPIEL

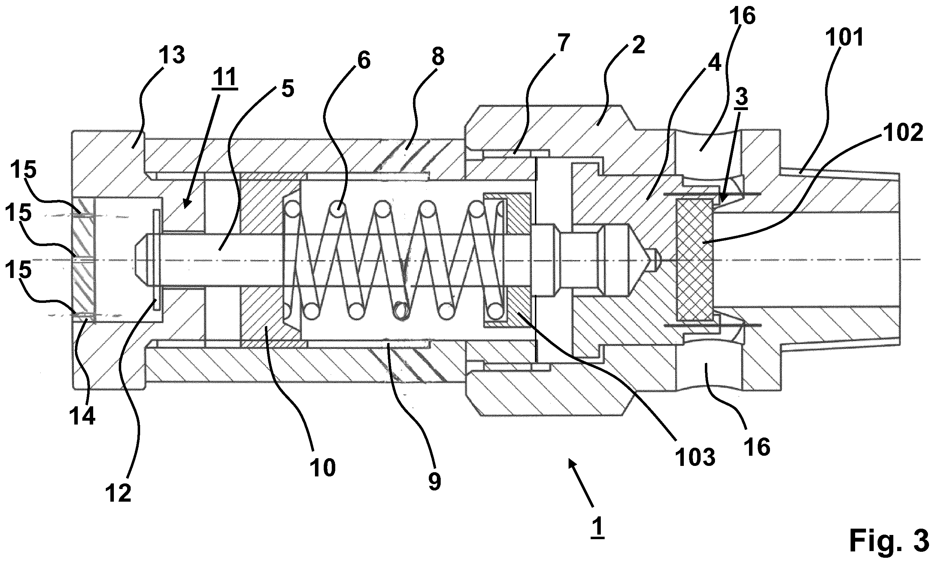

Das dritte bevorzugte Ausführungsbeispiel ist in Fig. 3 zu sehen. Das Sicherheitsventil 1 ist hierbei analog zu dem ersten und zweiten Ausführungsbeispiel aufgebaut. Nur der Deckel 14 weist mehrere sehr kleine Lüftungsöffnungen 15 auf. Diese Lüftungsöffnungen 15 haben bevorzugt einen Durchmesser von höchstens 2 mm, besonders bevorzugt sogar von höchstens 1 mm.

### VIERTES AUSFÜHRUNGSBEISPIEL

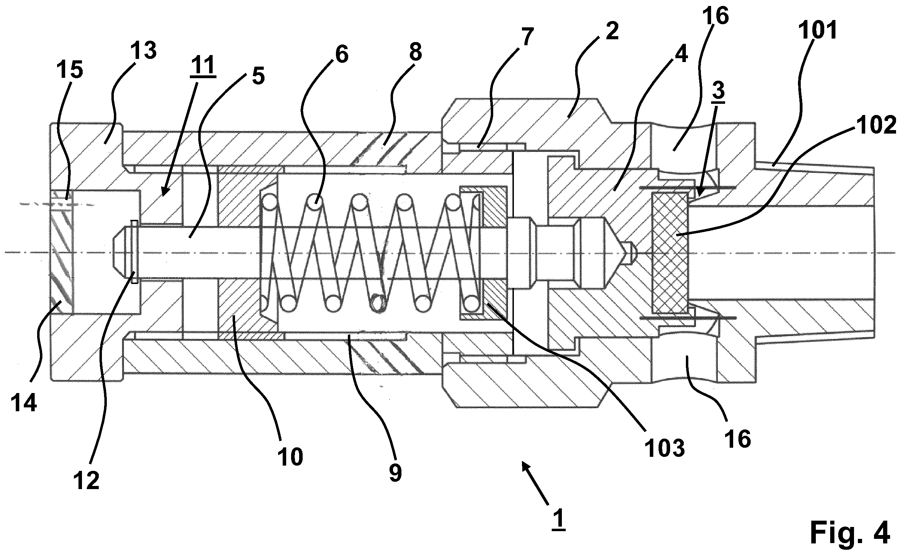

Das vierte bevorzugte Ausführungsbeispiel ist in Fig. 4 zu sehen. Das Sicherheitsventil 1 ist hierbei analog zu den vorhergehenden Ausführungsbeispielen aufgebaut. Nur der Deckel 14 weist hierbei eine exzentrische Lüftungsöffnung 15 auf.

Diese exzentrische Lüftungsöffnung 15 ist hierbei so gestaltet, dass sie außerhalb des Einflussbereichs der Ventilstange 5 ist. Hierzu ist es oft zweckmäßig, auch den Vorsprung 12 der Ventilstange 5 weniger hervorspringend zu gestalten, damit ein eventuell von oben senkrecht einführbares blockierendes Teil den Vorsprung 12 und damit die Ventilstange 5 nicht blockiert. Auch dieser reduzierte Vorsprung 12 ist in Fig. 4 zu erkennen.

### FÜNFTES AUSFÜHRUNGSBEISPIEL

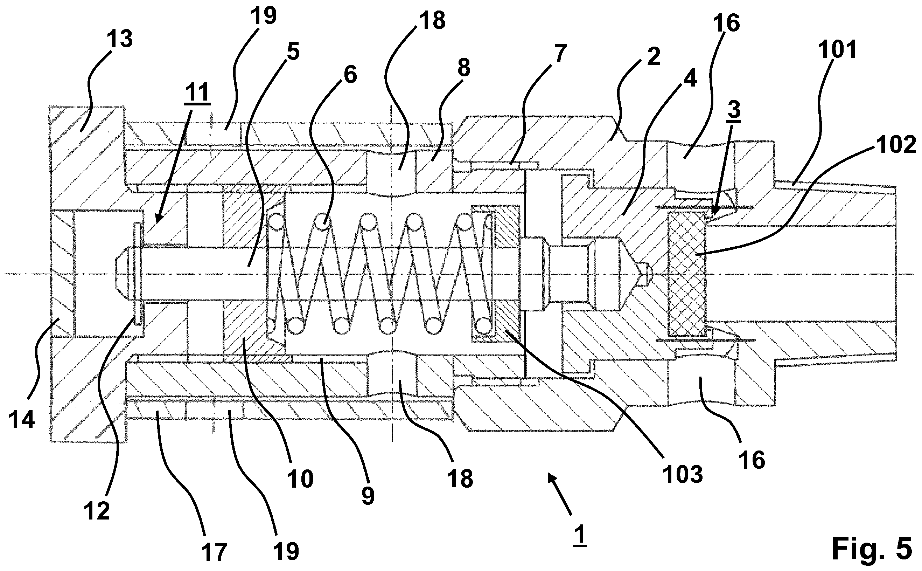

Das fünfte bevorzugte Ausführungsbeispiel ist in Fig. 5 abgebildet. Auch dieses ist analog zu den vorherigen Ausführungsbeispielen ausgebildet. Der Mantelstutzen 8 weist hierbei jedoch radiale Öffnungen 18 auf. Diese werden von einer Schutzhülse 17 verdeckt, die bevorzugt zwischen dem Ventilgehäuse 2 und dem Topf 13 liegt. Auch diese Schutzhülse 17 weist mindestens eine Öffnung 19 auf, wodurch die radialen Öffnungen 18 Druck an die Umgebung abgeben können, ohne dass dabei die Gefahr einer direkten Manipulation der Schließfeder 6 gegeben ist. Der Deckel 14 ist in diesem gezeigten Beispiel komplett verschlossen, was aber nicht zwingend so sein muss.

### BEZUGSZEICHENLISTE

- 1: Sicherheitsventil
- 2: Ventilgehäuse
- 3: Ventilsitz
- 4: Ventilkörper
- 5: Ventilstange
- 6: Schließfeder
- 7: Innengewinde des Ventilgehäuses
- 8: Mantelstutzen
- 9: Innengewinde des Mantelstutzens
- 10: Anschlag für die Schließfeder
- 11: Nach innen vorspringender Anschlag
- 12: Vorsprung der Ventilstange
- 13: Topf
- 14: Deckel
- 15: Lüftungsöffnung
- 16: Ablassöffnung
- 17: Schutzhülse
- 18: Radiale Öffnung des Mantelstutzens
- 19: Öffnung der Schutzhülse

- 101: Gewindeabschnitt
- 102: Ventilelement
- 103: Anschlag

## Patentansprüche

1. Sicherheitsventil (1) zur Begrenzung des Drucks eines Druckbehälters, insbesondere eines Druckluftbehälters, mit einem einen Ventilsitz (3) aufweisenden Ventilgehäuse (2) und einem in diesem axial verschiebbar aufgenommenen, mit dem Ventilsitz (3) zusammenwirkenden Ventilkörper (4) von dem auf der sitzabgewandten Seite eine Ventilstange (5) absteht, wobei der Ventilkörper (4) durch Zug an der Ventilstange (5) entgegen der einstellbaren Kraft einer Schließfeder (6) vom Ventilsitz (3) abhebbar ist, **dadurch gekennzeichnet, dass** der die Außenbegrenzung des Sicherheitsventils bildende Mantel nirgendwo eine Öffnung trägt in die ein Fremdkörper derart eingebracht werden kann, dass ein Abheben vom Ventilsitz (3) bei Anliegen des bestimmungsgemäßen Ventilöffnungsdrucks erschwert oder vereitelt wird.

2. Sicherheitsventil (1) zur Begrenzung des Drucks eines Druckbehälters, insbesondere eines Druckluftbehälters, mit einem einen Ventilsitz (3) aufweisenden Ventilgehäuse (2) und einem in diesem axial verschiebbar aufgenommenen, mit dem Ventilsitz (3) zusammenwirkenden Ventilkörper (4) von dem auf der sitzabgewandten Seite eine Ventilstange (5) absteht, wobei der Ventilkörper (4) durch Zug an der Ventilstange (5) entgegen der einstellbaren Kraft einer Schließfeder (6) vom Ventilsitz (3) abhebbar ist, wobei das Ventilgehäuse (2) mit einem Innengewinde (7) versehen ist, in welches direkt oder indirekt ein Mantelstutzen (8) einschraubbar ist, welcher ein Innengewinde (9) aufweist, in welches ein Anschlag (10) einschraubbar ist, der mit dem rückwärtigen Ende der Schließfeder (6) zusammenwirkt, wobei hinter dem Anschlag eine mit dem Ventilgehäuse verschraubbare Abdeckung vorgesehen ist, die einen nach innen vorspringenden Anschlag (11) aufweist, der derart hinter einen Vorsprung (12) der Ventilstange (5) fasst, dass entweder durch Schrauben der Abdeckung in Losrichtung oder durch völliges Abschrauben der Abdeckung und Aufbringung von händischem Zug an der Ventilstange (5) gezogen werden kann, dass das Sicherheitsventil (1) abbläst, wobei die Abdeckung stets den Zugang zum Anschlag (10) soweit vereitelt, dass er nicht verstellt werden kann, wobei die Abdeckung einen Topf (13) ausbildet, der das Ende der Ventilstange (5) aufnimmt, **dadurch gekennzeichnet, dass** der Topf (13) vollständig durch einen Deckel (14) verschlossen ist und/oder dass der Deckel eine Lüftungsöffnung (15) oder mehrere Lüftungsöffnungen (15) aufweist, die derart klein ist/sind, dass ein Einschrauben einer Schraube in eine jeweilige Lüftungsöffnung (15) nicht möglich ist und/oder eine Lüftungsöffnung (15) aufweist, die derart schräg verläuft, dass die Achse der Lüftungsöffnung (15) an der Ventilstange (5) vorbeiführt und/oder die Lüftungsöffnung (15) exzentrisch an dem Deckel (14) angebracht ist und außerhalb des Einflussbereichs der Ventilstange (5) ist.

3. Sicherheitsventil (1) bevorzugt, aber nicht nur nach Anspruch 1 oder 2, **dadurch gekennzeichnet, dass** das Ventilgehäuse (2) mindestens eine Ablassöffnung zum bestimmungsgemäßen Ablassen des überhöhten Drucks nach Abheben des Ventilkörpers (4) vom Ventilsitz (3) aufweist, wobei die mindestens eine Ablassöffnung (16) und/oder der Ventilteller so gestaltet ist, dass die Ablassöffnung (16) in jeder bestimmungsgemäßen Stellung des Ventilkörpers (4) nicht den Bereich hinter dem Ventilkörper (4) freigibt und daher das Einschieben eines den Ventilteller blockierenden Stifts unmöglich ist.

4. Sicherheitsventil (1) bevorzugt, aber nicht nur nach einem der vorhergehenden Ansprüche, **dadurch gekennzeichnet, dass** radiale Öffnungen (18) im Mantelstutzen (8) nicht im Bereich der Schließfeder (6) vorherrschen oder nur so, dass die Schließfeder in keiner Stellung des Ventils direkt manipulierbar ist.

5. Sicherheitsventil (1) nach Anspruch 3, **dadurch gekennzeichnet, dass** das Sicherheitsventil (1) eine Schutzhülse (17) aufweist, die zumindest die radialen Öffnungen (18) des Mantelstutzens (8) verdeckt.

6. Sicherheitsventil (1) nach einem der vorhergehenden Ansprüche, **dadurch gekennzeichnet, dass** der Deckel (14) aus Metall besteht.

7. Sicherheitsventil (1) nach einem der vorhergehenden Ansprüche, **dadurch gekennzeichnet, dass** der Deckel (14) einen Bund aufweist, mit dem der Deckel (14) in den Topf eingepresst ist.

8. Sicherheitsventil (1) nach einem der vorhergehenden Ansprüche, **dadurch gekennzeichnet, dass** der Deckel (14) nicht zerstörungsfrei von dem Topf (13) abnehmbar ist.

9. Sicherheitsventil (1) nach einem der vorhergehenden Ansprüche, **dadurch gekennzeichnet, dass** der Deckel (14) so gestaltet und montiert ist - bevorzugt nachbehandelt -, dass er für das unbewaffnete Auge als einstofflich-integraler Bestandteil des Topfes (14) erscheint.

10. Sicherheitsventil (1) nach einem der vorhergehenden Ansprüche, **dadurch gekennzeichnet, dass** der Deckel (14) durch zumindest teilweise Umbördelung des Topfes (13) in diesem axial befestigt ist.

11. Sicherheitsventil (1) nach einem der vorhergehenden Ansprüche, **dadurch gekennzeichnet, dass** der Deckel (14) mit dem Topf (13) verschweißt ist, bevorzugt mittels Schweißpunkten.

12. Sicherheitsventil (1) nach einem der vorhergehenden Ansprüche, **dadurch gekennzeichnet, dass** der Deckel (14) mit dem Topf (13) verlötet ist, bevorzugt mittels Hartlötung.
